# EUROPEAN PATENT SPECIFICATION

(11) **EP 2 373 408 B1**
(45) Date of publication and mention of the grant of the patent: **17.09.2014**
(21) Application number: 08876134.1
(22) Date of filing: 19.12.2008
(51) Int. Cl.: B01J 19/00, C10G 1/10, C10B 53/07

(54) **REACTOR FOR THE THERMO-CATALYTIC CONVERSION OF PLASTIC MATERIALS**
REAKTOR FÜR DIE THERMOKATALYTISCHE UMWANDLUNG VON KUNSTSTOFFMATERIALIEN
RÉACTEUR POUR CONVERSION THERMO-CATALYTIQUE DE MATÉRIAUX PLASTIQUES

(43) Date of publication of application: 12.10.2011
(73) Proprietor: INSER ENERGIA S.P.A., 10121 Torino (IT)
(72) Inventor: FAUSSONE, Gian, Claudio, Paolo, I-10146 Torino (IT)
(74) Representative: Garavelli, Paolo
(86) International application number: PCT/IT2008/000776
(87) International publication number: WO 2010/070689

(56) References cited:
- WO-A-03/070815
- WO-A-2008/141655

## Description

The present invention refers to a reactor for the thermo-catalytic conversion of plastic materials into liquid hydrocarbons.

Catalytic de-polymerisation processes of plastic materials are known in the art, which, through the creation of adequate chemical-physical conditions and the use of suitable catalysts, allow re-converting such plastic materials, such as typically thermoplastic materials in general (polyolefin PE and PP, etc.) with tolerances of other mixed plastic materials (PET, PA, PS, PVC, etc.) into hydrocarbons as complex mixtures of paraffin and gas, by breaking, due to the catalysts, the long polymeric chains of plastic materials into chains whose sizes are much shorter.

The art further proposes thermo-catalytic reactors inside which the above catalytic de-polymerisation processes can occur: in general, the thermo-catalytic reactors perform therein the de-polymerisation of the plastic material at a temperature of about 350-400°C with a catalyst and without oxygen, obtaining, as output, the above hydrocarbon mixture: an example of such reactors is described in PL 346104. In particular, a known thermo-catalytic reactor is composed of at least one reaction furnace in which plastic materials are inserted to be converted into hydrocarbons through a catalytic depolymerisation process and at least one catalyst; inside such reaction furnace, mixing means operate and re-mix the reagents in order to make the formation of polymerisation vapours easier, and at least one thermal system, typically made as a series of electric resistances, suitable to keep, inside the reaction furnace, an adequate reaction temperature: simplifying, the plastic materials inserted inside the reaction furnace at first melt, and then, in contact with the catalyst, are transformed into paraffin as vapour, which is afterwards extracted from the furnace and condensed through suitable condensers.

In known thermo-catalytic reactors, therefore, the catalyst must be inserted inside the reaction furnace from outside: in such a way, the catalyst dosing is difficult to quantify and very often a good part of the catalyst itself remains inactive and gets lost with reaction waste materials. Taking into account that the catalysts used in de-polymerisation processes are extremely costly, it can be understood how a technical solution that allows a substantial catalyst saving is of interest.

Therefore, object of the present invention is solving the above prior art problems by providing a reactor for the thermo-catalytic conversion of plastic materials into liquid hydrocarbons in which some, preferably all, surfaces in contact with the plastic materials reacting inside the reaction furnace are covered with at least one layer of slow-release catalyst material, doing without the need of inserting such catalyst from outside.

The above and other objects and advantages of the invention, as will appear from the following description, are obtained with a reactor for the thermo-catalytic conversion of plastic materials into liquid hydrocarbons as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a nonlimiting example, with reference to the enclosed drawings, in which:

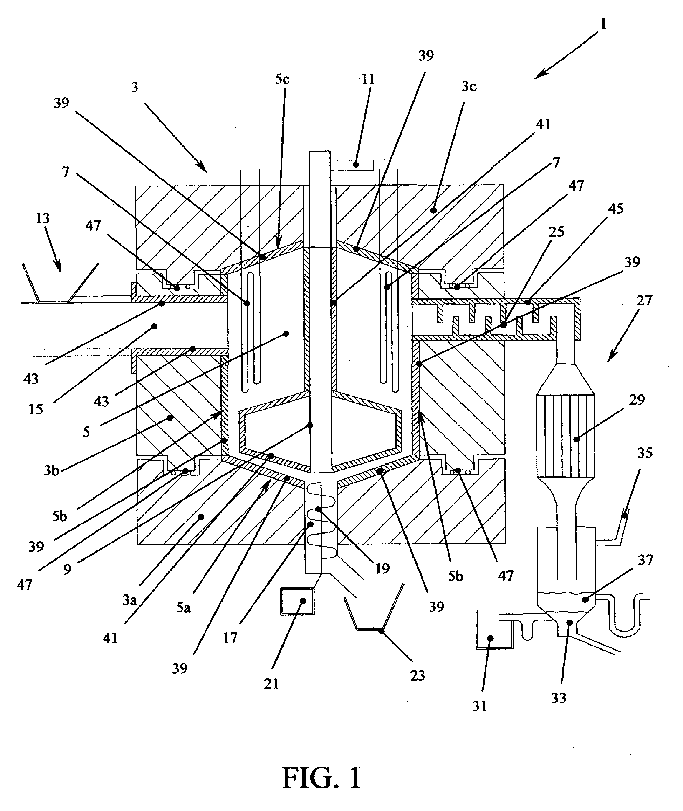

- Figure 1 shows a side sectional view of a preferred embodiment of the reactor for the thermo-catalytic conversion of plastic materials into liquid hydrocarbons according to the present invention; and

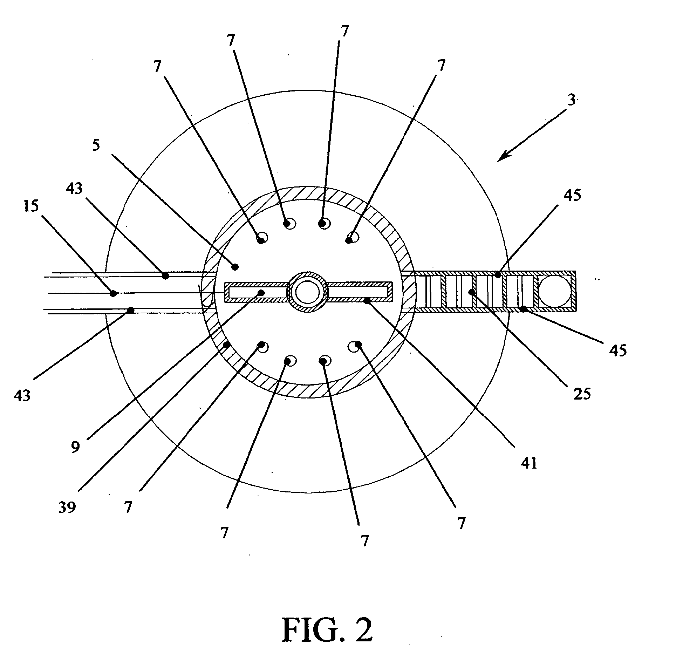

- Figure 2 shows a top view of the reactor of Figure 1.

With reference to the Figures, it is possible to note that the reactor 1 for the thermo-catalytic conversion of plastic materials into liquid hydrocarbons through de-polymerisation according to the present invention comprises at least one reaction furnace 3 equipped with at least one reaction chamber 5, inside which the catalytic de-polymerisation of such plastic materials occurs. In particular, the reaction chamber 5 is defined by at least one base wall 5a, at least one lateral perimeter wall 5b and at least one upper wall 5c. The reaction furnace 3 is further equipped with at least one thermal system, preferably made as at least one electric resistance-type heater 7, adapted to heat the reaction chamber 5 and keep it at a reaction temperature preferably included between 350°C and 500°C.

The reaction furnace 3 is further equipped with mixing means operating inside the reaction chamber 5 for keeping moving the materials subjected to depolymerisation and making their reaction easier, such mixing means being preferably made as at least one rotary mixer 9, with preferably vertical rotation axis, actuated by at least one first electric motor 11.

The reaction chamber 5 of the furnace 3 is supplied with plastic materials, such as thermo-plastic materials in general (polyolefin PE and PP, etc.) with tolerances of other mixed plastic materials (PET, PA, PS, PVC, etc.), through supplying means 13 adapted to transport and dose such plastic materials, preferably made as at least one hopper and at least one scroll-type system, substantially known, through at least one supply duct 15 pertaining to the reaction chamber 5 itself.

In parallel, the reactor 1 according to the present invention is equipped with at least one discharge duct 17, pertaining, in a lower position, to the reaction chamber 5, adapted to take inert products and reaction ashes from inside the reaction chamber 5, preferably through supplying means made as at least one scroll 19 actuated by at least one second electric motor 21, and to store them, possibly, into suitable containers 23.

As taught by the prior art, hydrocarbons and paraffin, as vapours produced inside the reaction chamber 5 through the catalytic de-polymerisation process, are withdrawn from inside the reaction chamber 5 itself through at least one withdrawal duct 25, internally equipped with at least one internal, forced, gymkhana- type path, in order to be conveyed to at least one condenser 27, preferably comprising at least one heat exchanger 29 with a layer of tubes for circulating water, suitable to condense such vapours and separate them into water 31, further slag 33, un-condensable substances 35 and liquid condensed hydrocarbons and paraffin 37.

Advantageously, at least some surfaces of the reactor 1 according to the present invention for the thermo-catalytic conversion of plastic materials into liquid hydrocarbons in contact with the plastic materials reacting inside the reaction furnace are covered with at least one layer 39 of slow-release catalyst material. The base wall 5a, the lateral perimeter wall 5b and the upper wall 5c of the reaction chamber 5 are covered with such at least one layer 39 of slow-release catalyst material. Preferably, also at least the external surface of the mixing means 9 in contact with the plastic materials reacting inside the reaction furnace 3, and in particular the reaction chamber 5, is equipped with such at least one layer 41 of slow-release catalyst material. Still more preferably, at least one section of such supply duct 15 of plastic materials is internally covered with such at least one layer 43 of slow-release catalyst material. Still more preferably, at least one section of such withdrawal duct 25 of reaction vapours is internally covered with such at least one layer 45 of slow-release catalyst material.

Advantageously, therefore, the use of the layer 39, 41, 43, 45 of slow-release catalyst material inside the reaction furnace 3 does without the need of inserting such catalyst from outside and allows an optimum consumption, without wasting the catalyst itself, since the necessary stoichiometric dosage thereof is taken from the de-polymerisation reaction.

Moreover, when necessary, namely when excessively consumed by the de-polymerisation reactions occurred inside the reaction chamber 3, the layer 39, 41, 43, 45 of slow-release catalyst material can be restored by a simple plastering operation of the internal surfaces of the reaction furnace 3.

The reaction furnace 3 is composed of modular components, comprising:
- at least one base module 3a realising the base wall 5a of the reaction chamber 5;
- at least one central module 3b realising the lateral perimeter wall 5b of the reaction chamber 5; and
- at least one upper module 3c realising the upper wall 5c of the reaction chamber 5.

Between the junction points of such modules 3a, 3b, 3c, obviously, suitable layers of insulating material 47 can be interposed.

## Claims

1. Reactor (1) for a thermo-catalytic conversion of plastic materials into liquid hydrocarbons (37) through de-polymerisation, comprising at least one reaction furnace (3) equipped with at least one reaction chamber (5), **characterised in that** at least some surfaces of said reactor (1) in contact with said plastic materials reacting inside said reaction furnace (3) are covered with at least one layer (39, 41, 45, 47) of catalyst material, said surfaces comprising at least one base wall (5a), at least one lateral perimeter wall (5b) and at least one upper wall (5c) of said reaction chamber (5) covered with at least one of said layers (39) of catalyst material, and **in that** said reaction furnace (3) is composed of at least one base module (3a) realising said base wall (5a) of said reaction chamber (5), at least one central module (3b) realising said lateral perimeter wall (5b) of said reaction chamber (5), and at least one upper module (3c) realising said upper wall (5c) of said reaction chamber (5).

2. Reactor (1) according to claim 1, **characterised in that** it is equipped with mixing means operating inside said reaction chamber (5).

3. Reactor (1) according to claim 2, **characterised in that** said surfaces comprise at least one external surface of said mixing means (9) in contact with said plastic materials reacting inside said reaction chamber (5) covered with at least one of said layers (41) of catalyst material.

4. Reactor (1) according to claim 2, **characterised in that** said mixing means are at least one rotary mixer (9) actuated by at least one first electric motor (11).

5. Reactor (1) according to claim 1, **characterised in that** said reaction chamber (5) is supplied with said plastic materials through at least one supply duct (15) pertaining to said reaction chamber (5).

6. Reactor (1) according to claim 5, **characterised in that** said surfaces comprise at least one internal section of said supply duct (15) of said plastic materials covered with at least one of said layers (43) of catalyst material.

7. Reactor (1) according to claim 1, **characterised in that** it is equipped with at least one withdrawal duct (25) of hydrocarbon vapours from inside said reaction chamber (5).

8. Reactor (1) according to claim 7, **characterised in that** said surfaces comprise at least one internal section of said withdrawal duct (25) covered with at least one of said layers (45) of catalyst material.

9. Reactor (1) according to claim 1, **characterised in that** layers of insulating material (47) are interposed between junction points of said modules (3a, 3b, 3c).

## Patentansprüche

1. Reaktor (1) für die thermokatalytische Umwandlung von Kunststoffen in flüssige Kohlenwasserstoffe (37) durch Depolymerisation, mit mindestens einem Reaktionsofen (3), der mit mindestens einer Reaktionskammer (5) ausgestattet ist, und der **dadurch gekennzeichnet ist, dass** mindestens einige der Oberflächen des genannten Reaktors (1), die in Kontakt mit den Kunststoffen stehen, welche im Inneren des genannten Reaktionsofens (3) reagieren, mit mindestens einer Schicht (39, 41, 45, 47) Katalysatormaterial bedeckt sind, die genannten Oberflächen schließen mindestens eine Basiswand (5a), mindestens eine Umfangsseitenwand (5b) und mindestens eine obere Wand (5c) der genannten Reaktionskammer (5) ein, die mit mindestens einer der genannten Schichten (39) des Katalysatormaterials bedeckt sind, sowie **dadurch gekennzeichnet ist, dass** der genannte Reaktionsofen (3) aus mindestens einem Basismodul (3a), das die genannte Basiswand (5a) der genannten Reaktionskammer (5) darstellt, aus mindestens einem mittleren Modul (3b), das die genannte Umfangsseitenwand (5b) der genannten Reaktionskammer (5) darstellt, und mindestens einem oberen Modul (3c), das die genannte obere Wand (5c) der genannten Reaktionskammer (5) darstellt, besteht.

2. Reaktor (1) gemäß Patentanspruch 1, der **dadurch gekennzeichnet ist, dass** er mit Mischgeräten ausgestattet ist, die im Inneren der genannten Reaktionskammer (5) reagieren.

3. Reaktor (1) gemäß Patentanspruch 2, der **dadurch gekennzeichnet ist, dass** die genannten Oberflächen mindestens eine Außenfläche der genannten Mischgeräte (9) einschließen, die mit den genannten Kunststoffen in Kontakt steht, welche im Inneren der genannten Reaktionskammer (5) reagieren, die mit mindestens einer der Schichten (41) des Katalysatormaterials mit langsamer Freisetzung bedeckt ist.

4. Reaktor (1) gemäß Patentanspruch 2, der **dadurch gekennzeichnet ist, dass** die genannten Mischgeräte aus mindestens einem Drehmischer (9) bestehen, der durch mindestens einen ersten Elektromotor (11) angetrieben wird.

5. Reaktor (1) gemäß Patentanspruch 1, der **dadurch gekennzeichnet ist, dass** die genannte Reaktionskammer (5) in den genannten Kunststoffen durch mindestens eine Zuführleitung (15), die der genannten Reaktionskammer (5) angehört, versorgt wird.

6. Reaktor (1) gemäß Patentanspruch 5, der **dadurch gekennzeichnet ist, dass** die genannten Oberflächen mindestens einen inneren Abschnitt der genannten Zuführleitung (15) der genannten Kunststoffe einschließen, die mit mindestens einer der genannten Schichten (43) des Katalysatormaterials bedeckt ist.

7. Reaktor (1) gemäß Patentanspruch 1, der **dadurch gekennzeichnet ist, dass** er mit mindestens einer Abzugsleitung (25) der Kohlenstoffdämpfe im Inneren der genannten Reaktionskammer (5) ausgestattet ist.

8. Reaktor (1) gemäß Patentanspruch 7, der **dadurch gekennzeichnet ist, dass** die genannten Oberflächen mindestens einen inneren Abschnitt der genannten Abzugsleitung (25) einschließen, die mit mindestens einer der Schichten (45) des Katalysatormaterials mit langsamer Freisetzung bedeckt ist.

9. Reaktor (1) gemäß Patentanspruch 1, der **dadurch gekennzeichnet ist, dass** zwischen den Verbindungspunkten der genannten Module (3a, 3b, 3c) Schichten aus Isoliermaterial (47) angebracht sind.

## Revendications

1. Réacteur (1) pour la conversion thermocatalytique de matières plastiques en hydrocarbures liquides (37) à travers la dépolymérisation, comprenant un four de réaction (3) au moins doté d'une chambre de réaction (5), dont certaines surfaces du réacteur (1) au contact des matières plastiques qui réagissent à l'intérieur du four de réaction (3) sont recouvertes d'une couche (39, 41, 45, 47) d'un matériau de catalyse ; ces surfaces doivent comprendre au moins une paroi de base (5a), une paroi périmétrique latérale (5b) et une paroi supérieure (5c) de la chambre de réaction (5) et doivent être recouvertes au moins d'une couche de matériau de catalyse (39) ; dont le four de réaction (3) est composé au moins d'un module de base (3a) constituant la paroi de base (5a) de la chambre de réaction (5), d'un module central (3b) constituant la paroi périmétrique latérale (5b) de la chambre de réaction (5) et d'un module supérieur (3c) constituant la paroi supérieure (5c) de la chambre de réaction (5).

2. Réacteur (1), selon la revendication 1, doté de mélangeurs travaillant à l'intérieur de la chambre de réaction (5).

3. Réacteur (1), selon la revendication 2, dont les surfaces comprennent au moins une surface extérieure des mélangeurs (9) se trouvant au contact des matières plastiques qui réagissent à l'intérieur de la chambre de réaction (5) et qui est recouverte au moins d'une couche de matériau de catalyse (41) à relâchement lent.

4. Réacteur (1), selon la revendication 2, dont les mélangeurs sont composés au moins d'un mélangeur tournant (9) actionné par un premier moteur électrique (11).

5. Réacteur (1), selon la revendication 1, où les matières plastiques sont acheminées dans la chambre de réaction (5) à travers le conduit d'alimentation (15) relatif.

6. Réacteur (1), selon la revendication 5, dont les surfaces comprennent un morceau intérieur du conduit d'alimentation (15) des matières plastiques qui est recouvert au moins d'une couche de matériau de catalyse (43).

7. Réacteur (1), selon la revendication 1, qui est doté d'un conduit de prélèvement (25) des vapeurs d'hydrocarbures à l'intérieur de la chambre de réaction (5).

8. Réacteur (1), selon la revendication 7, dont les surfaces comprennent un morceau intérieur du conduit de prélèvement (25) qui est recouvert au moins d'une couche de matériau de catalyse (45) à relâchement lent.

9. Réacteur (1), selon la revendication 1, où des couches de matériau isolant (47) sont interposées entre les points de raccord des modules (3a, 3b, 3c).
